# EUROPÄISCHE PATENTSCHRIFT

(11) **EP 2 838 743 B1**
(45) Veröffentlichungstag und Bekanntmachung des Hinweises auf die Patenterteilung: **23.01.2019**
(21) Anmeldenummer: 13713370.8
(22) Anmeldetag: 15.03.2013
(51) Int. Cl.: B60G 7/00, B60G 7/02, F16F 1/38

(54) **GUMMILAGERANBINDUNG**
RUBBER BEARING CONNECTION
FIXATION DE PALIER EN CAOUTCHOUC

(30) Priorität: 16.04.2012 DE 102012206132
(43) Veröffentlichungstag der Anmeldung: 25.02.2015
(73) Patentinhaber: ZF Friedrichshafen AG, 88046 Friedrichshafen (DE)
(72) Erfinder: FIECHTNER, Martin, 71636 Ludwigsburg (DE); MÖDINGER, Wolfgang, 71384 Weinstadt (DE); WELLENSIEK, Hans-Juergen, 32257 Buende (DE); MIDDELKAMPF, Arnold, 49635 Badbergen (DE)
(86) Internationale Anmeldenummer: PCT/EP2013/055317
(87) Internationale Veröffentlichungsnummer: WO 2013/156218

(56) Entgegenhaltungen:
- DE-A1- 3 708 037
- DE-U1- 20 004 149
- JP-A- H07 186 652
- JP-A- 2003 294 020
- US-A- 5 879 026

## Beschreibung

Die vorliegende Erfindung betrifft einen Lenker für ein Fahrzeug nach dem Oberbegriff des Patentanspruchs 1. Weiterhin betrifft die vorliegende Erfindung ein Herstellungsverfahren für einen solchen Lenker.

Bei der Fertigung von verschiedenen Bauteilgruppen legt die Automobilindustrie darauf Wert, dass möglichst einfache, in der Herstellung kostengünstige Bauelemente verwendet werden, und dass bei Service- bzw. Reparaturarbeiten ein einfaches Austauschen einzelner Bauelemente ermöglicht wird.

Die DE 37 08 037 A1 offenbart eine Radaufhängung für ein Kraftfahrzeug mit einem Hilfsrahmen, der ein Paar von frontseitigen Endabschnitten sowie ein Paar von rückseitigen Endabschnitten aufweist, und mit einem Paar von Schwingarmen, von denen jeder ein Basisteil mit einem frontseitigen Lagerteil und mit einem rückseitigen Lagerteil umfasst. Ein Paar von Konsolen ist mit ihren Basisteilen an den rückseitigen Endabschnitten des Hilfsrahmens befestigt. Ferner ist jede Konsole mit einer mit ihr einstückigen Hülse versehen, wobei jedes rückseitige Lagerteil der Schwingarme durch ein Gummi-Metall-Lager, das eine Metallbuchse sowie ein an dieser befestigtes und in der Hülse festgelegtes Gummielement umfasst, gelagert ist.

Die JP 2003294020 A beschreibt eine Welle aus Stahl, die mit einem Schraubenabschnitt in ein Schraubenloch eines Gegenelements aus Aluminiumlegierung eingeschraubt wird, bis ein Flanschabschnitt an einer Anlagefläche des Gegenelements anliegt. Auf einem tragenden Wellenabschnitt der Welle sitzt ein Lager, welches mittels einer auf die Welle aufgeschraubten Mutter fixiert ist.

Aus der DE 200 041 49 U1 ist eine querelastische Lageranordnung für einen Lenker in einer Radaufhängung bekannt, die einen Lagerbolzen und ein Lager aufweist, welches Lager als Gummilager ausgebildet ist. Dieses Gummilager umfasst sowohl eine Außen- als auch eine Innenbuchse, wobei zwischen den Buchsen - zumindest abschnittweise - ein Elastomerkörper vorgesehen ist. Der Bolzen ist in die Innenbuchse eingepresst, was auch als Presspassung zwischen Bolzen und Lager bezeichnet wird. Bei einer Presspassung wird im Falle eines Austauschs des Gummilagers sowohl das Lager selbst als auch der Bolzen infolge der hohen Auf- und Abpresskräfte leicht beschädigt.

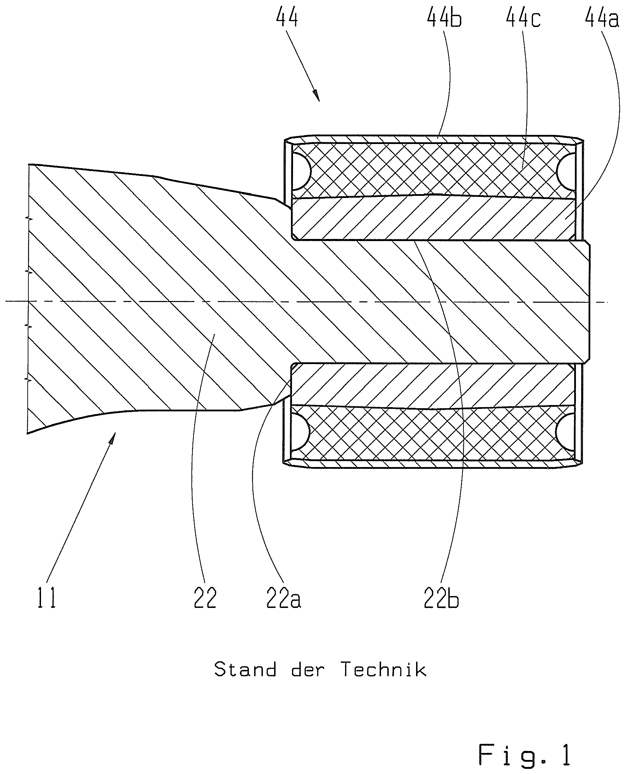

Eine derartige Verbindung von Zapfen und Lager nach Art einer Presspassung aus dem Stand der Technik wird im Folgenden anhand von Figur 1 erläutert.

Figur 1 zeigt einen Zapfen 22 eines Lenkers 11, welcher einfach gestuft ist. Der Zapfen 22 weist einen gestuften Bereich 22a und eine Anlagefläche 22b für ein Lager 44 auf.

Das Lager 44 umfasst eine Innenbuchse 44a und eine Außenbuchse 44b. Zwischen der Innenbuchse 44a und der Außenbuchse 44b ist ein Elastomerkörper 44c angeordnet.

Das Lager 44 ist mittels einer Presspassung auf den Zapfen 22 aufgepresst. Eine Presspassung zwischen den beiden Bauteilen Lager 44 und Zapfen 22 bedeutet, dass der Durchmesser des Zapfens im Bereich 22b größer ist als der Durchmesser der Innenbuchse 44a des Lagers 44. Nachteilig hierbei ist, dass die Innenbuchse 44a des Lagers 44 und der Zapfen 22 im Bereich 22b bei der Montage bzw. Demontage des Lagers 44 in Folge der hohen Aufpress- bzw. Abpresskräfte beschädigt werden können.

Das Lager 44 kommt in dem Anlagebereich 22b an dem Zapfen 22 zum Anliegen. Der gestufte Bereich 22a dient als Anschlagsfläche für das Lager 44, d.h. bis zu diesem Bereich 22a kann das Lager 44 auf den Zapfen 22 aufgepresst werden.

Ferner ergaben Recherchen der Anmelderin, dass es aus dem Stand der Technik weiterhin bekannt ist, Gummilager formschlüssig mit einem Zapfenende des Lenkers zu verbinden und zusätzlich mittels einer Schraubverbindung zu fixieren. Die Quer- und Längskräfte werden über den, vorzugsweise konusförmigen Formschluss, und über einen Schraubenkopf aufgenommen. Die radialen Kräfte hingegen werden per Reibschluss übertragen. Das Lager umschließt nicht das Lenkerelement, was somit die Stabilität der Verbindung beeinträchtigt. Weiterhin ergeben sich hohe Anforderungen an die formschlüssige Ausbildung zwischen Lenkerende und Lager im Verbindungsbereich, wodurch die Fertigungskosten dieser Bauteile relativ hoch sind.

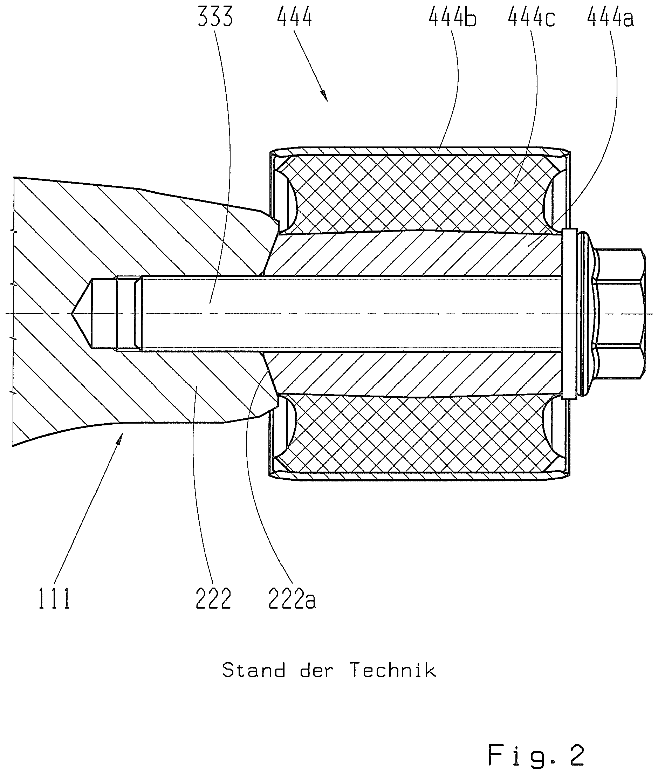

Dies wird anhand von Figur 2 beschrieben:
Figur 2 zeigt einen Zapfen 222 eines Lenkers 111 und ein Lager 444. Der Zapfen 222 und das Lager 444 sind im Bereich 222a über eine komplementäre konusartige Form formschlüssig miteinander verbunden.

Das Lager 444 umfasst eine Innenbuchse 444a, eine Außenbuchse 444b und einen zwischen der Innenbuchse 444a und der Außenbuchse 444b angeordneten Elastomerkörper 444c.

Zum Fixieren der Lagerung 444 an dem Zapfen 222 ist ein Befestigungsmittel nach Art einer Schraube 333 angeordnet.

Die Schraube 333 dient - neben dem Formschluss - als weiteres Verbindungselement zwischen dem Zapfen 222 und dem Lager 444. Der Schraubenkopf kommt an dem Lager 444 zum Anliegen und die Schraubverbindung ist in den Zapfen 222 des Lenkers 111 eingeschraubt.

Im Unterschied zu Figur 1, umfasst das Lager 444 den Zapfen 222 des Lenkers im Stand der Technik gemäß Figur 2 nicht.

Der vorliegenden Erfindung liegt daher die Aufgabe zugrunde, eine konstruktiv einfache und kostengünstige Lageranbindung an einen Lenkerzapfen zu ermöglichen.

Gelöst ist diese Aufgabe mittels eines Lenkers für ein Fahrzeug, umfassend ein Lager und einen Zapfen, wobei das Lager mindestens ein elastisches Teilelement umfasst, und wobei das Lager an dem Zapfen des Lenkers angeordnet und den Zapfen umschließend ausgebildet ist gemäß Anspruch 1, und ein erfindungsgemäßes Herstellungsverfahren für einen Lenker eines Fahrzeugs gemäß Anspruch 9. Vorteilhafte Weiterbildungen des erfindungsgemäßen Lenkers finden sich in den Ansprüchen 2 bis 8. Hiermit wird der Wortlaut dieser Unteransprüche durch ausdrückliche Bezugnahme in die Beschreibung aufgenommen, um Textwiederholungen zu vermeiden.

Der erfindungsgemäße Lenker für ein Fahrzeug, umfasst ein Lager und einen Zapfen, wobei das Lager mindestens ein elastisches Teilelement umfasst, und wobei das Lager an dem Zapfen des Lenkers angeordnet und den Zapfen umschließend ausgebildet ist. Der Lenker zeichnet sich dadurch aus, dass der Zapfen und das Lager derart zusammenwirkend ausgebildet sind, dass das Lager bezogen auf den Zapfen eine Übergangspassung aufweist, und dass das Lager mittels eines Befestigungselementes an dem Zapfen fixiert ist.

Der Begriff "Übergangspassung" wird im Rahmen der vorliegenden Beschreibung gemäß der aus dem Maschinenbau üblichen Definition hinsichtlich einer Abgrenzung zu einer Presspassung und einer Spielpassung verwendet. Passungen werden durch den Unterschied zwischen dem Maß einer Bohrung und dem Maß einer Welle bestimmt:
Presspassung (auch Übermaßpassung genannt) bedeutet, dass das Höchstmaß der Bohrung immer kleiner, im Grenzfall auch gleich groß wie das Mindestmaß der Welle ist. Spielpassung bedeutet, dass das Mindestmaß der Bohrung immer größer ist, im Grenzfall auch gleich groß wie das Höchstmaß der Welle. Bei einer Übergangspassung entsteht je nach den Istmaßen von Bohrung und Welle beim Fügen entweder ein Spiel oder ein Übermaß, siehe z.B. "Fachkunde Metall", Verlag Europa-Lehrmittel, 2003, ISBN 3-8085-1154-0*.* Wesentlich für das Vorliegen einer Übergangspassung sind somit nicht die Istmaße, sondern die Toleranzfelder der verwendeten Bauteile:
Bei der Übergangspassung überlappen das Toleranzfeld des Bohrungsmaßes und das Toleranzfeld des Wellenmaßes, wohingegen bei Presspassung und bei Spielpassung die genannten Toleranzfelder stets disjunkt sind bzw. keine Überschneidungen aufweisen.

Beispiele für Übergangspassungen sind nach Passungssystem "Einheitsbohrung": *dⱼ₆^{H7}* oder *dₘ₆^{H7}*, vgl. ISO-Norm 286(-1/-2).

Das Vorliegen einer Übergangspassung ergibt sich somit aus den Fertigungsvorgaben der verwendeten Bauteile bzw. aus einer statistischen Analyse einer Vielzahl gefertigter Bauteile.

Hinsichtlich des vorliegenden Erfindungsgegenstands entspricht der Zapfen der Welle und der lichte Innendurchmesser der Innenhülse des Lagers der Bohrung.

Im Vergleich zu der hier gewählten Übergangspassung ergibt sich aus der als Stand der Technik erwähnten DE 200 041 49 U1 eine Presspassung. Dies bedeutet, dass der Außendurchmesser des Zapfens im Rahmen der Fertigungstoleranzen größer ist als der Innendurchmesser der Innenbuchse des Lagers.

Die erfindungsgemäße Anordnung ermöglicht es, dass die zwischen Lenker und Lager wirkenden Kräfte über die Übergangspassung in Kombination mit den Befestigungsmitteln übertragen werden. Hierdurch wird das Risiko einer Beschädigung des Lagers verringert.

Die erfindungsgemäße Anordnung ermöglicht es, bei der Montage des Lenkers das Lager mit einem - im Verhältnis zu dem vorbekannten Stand der Technik - geringen Kraftaufwand auf den Zapfen aufzupressen bzw. darüber zu schieben und mittels eines Befestigungsmittels zu fixieren. Im Falle einer Demontage lässt sich das Lager in einfacher Weise abziehen und austauschen, ohne dass das Lager oder der Zapfen beschädigt wird.

Eine bevorzugte Ausführungsform des erfindungsgemäßen Lenkers sieht vor, dass der Zapfen einstückig mit dem restlichen Lenker ausgebildet ist. Der Zapfen, welcher von dem Lager umschlossen ist, kann dadurch ein erstes Teil des Lenkers darstellen, welcher mit einem weiteren Lenkerteil verbunden ist. Hierdurch ergibt sich eine flexible Ausgestaltung des Lenkers, welcher auf diese Weise einfach an den zur Verfügung stehenden Bauraum angepasst werden kann. Es liegt ebenfalls im Rahmen der Erfindung, dass der Zapfen ein separates, mit dem restlichen Lenker verbundenes Bauteil darstellt.

Vorteilhafterweise weist der Zapfen des Lenkers mindestens einen gestuften Bereich auf, wobei das Lager vorzugsweise bis zu dem gestuften Bereich auf den Zapfen aufgeschoben ist. Hierdurch ergibt sich eine vorzugsweise umlaufende axiale Anschlagsfläche, mittels derer das Lager positioniert werden kann. Die Montage des Lagers wird vereinfacht, da die durch den gestuften Bereich entstehende Anschlagfläche ein definiertes Positionieren des Lagers an dem Lenker erleichtert. Ferner dient die Anschlagsfläche auch dazu, die auftretenden Längskräfte aufzunehmen. Es liegt ebenfalls im Rahmen der Erfindung, den Zapfen mehrstufig auszubilden. Hierdurch verringert sich die Kontaktfläche des Lagers auf dem Zapfen, wodurch sowohl das Lager als auch der Zapfen geschont und weniger stark beansprucht werden.

Bevorzugt ist das Befestigungsmittel lösbar mit dem Lenker verbunden. Hierdurch können Wartungs- und Reparaturarbeiten in einfacher Weise durchgeführt werden.

Eine besonders bevorzugte Ausführungsform des erfindungsgemäßen Lenkers zeichnet sich dadurch aus, dass das Befestigungselement lösbar ausgebildet ist, vorzugsweise nach Art einer Schraube. Vorteilhafterweise ist das Befestigungselement in Richtung der Längsachse des Zapfens angeordnet, vorzugsweise koaxial. Dies bedeutet, dass die Schraube vorzugsweise lösbar angeordnet und entlang der Längsachse des Zapfens in diesen eingeschraubt ist. Die Schraube dient dazu, das Lager gegen ein Verlieren zu sichern, es zu fixieren und dessen Position festzulegen. Weiterhin wird durch die Schraubverbindung ermöglicht, das Lager im Falle von Reparaturarbeiten in einfacher Weise auszutauschen. Ferner überträgt die Schraube ein auf das Lager wirkendes Drehmoment auf den Lenker.

Vorteilhafterweise ist das Befestigungselement mittels Verklebung gegen ein ungewolltes Loslösen gesichert, insbesondere im Betrieb, welche Verklebung vorzugsweise im Bereich des Gewindes der Schraube angeordnet ist. Eine Klebesicherung ermöglicht es, dass sich die Schraubverbindung nicht ungewollt loslöst und als dauerhafte und sichere Verbindung der Bauelemente fungiert. Die Klebesicherung kann im Bereich des Gewindes (Gewindespiel) der Schraube angeordnet sein. Insbesondere ist bevorzugt, die Klebsicherung derart auszubilden, dass sie zwar die Schraube gegen ein ungewolltes Loslösen sichert, und dennoch einem Benutzer das Lösen der Schraube ermöglicht, ggf. unter Verwendung eines Werkzeugs, wie eines Schraubenschlüssels.

Eine weitere vorteilhafte Ausbildung des erfindungsgemäßen Lenkers sieht vor, dass zwischen der Schraube und dem Lager eine Scheibe zum Übertragen der Schraubenvorspannkraft vorgesehen ist. Neben der Übertragung der Schraubenvorspannkraft auf das Lager schützt die Scheibe das Lager während der Montage bzw. während des Verschraubvorgangs gegen Beschädigung.

Eine andere Weiterbildung des erfindungsgemäßen Lenkers sieht vor, dass das Lager als Gummilager ausgebildet ist. Vorteilhafterweise besteht dieses Gummilager aus einer Innenhülse bzw. Innenbuchse und einer Außenhülse bzw. Außenbuchse und einem sich zumindest abschnittweise dazwischen befindlichen Elastomerkörper. Die Innenbuchse und der Zapfen sind nach Art einer Übergangspassung gepaart. Sowohl die Innen- als auch die Außenhülse sind vorteilhafterweise aus einem metallischen Werkstoff, vorzugsweise aus Aluminium, gefertigt. Der Lenker ist ebenfalls vorzugsweise aus Aluminium ausgebildet. Die Erfindung soll jedoch nicht auf diesen Werkstoff beschränkt sein, sondern es können auch andere Werkstoffe Verwendung finden. Der Vorteil eines Gummilagers liegt darin, dass es verschiedene und im Stand der Technik gut erprobte Ausführungsvarianten und Größenabmessungen gibt. Durch die Wahl einer Übergangspassung wird ein Fressen, das heißt eine Beschädigung der Oberfläche des Zapfens und der Innenhülse des Gummilagers verhindert.

Wie oben bereits erläutert, kann der Zapfen auch mehrstufig ausgebildet sein. Eine vorteilhafte Weiterbildung des erfindungsgemäßen Lenkers zeichnet sich dadurch aus, dass der Zapfen mindestens einen zweiten gestuften Bereich aufweist zum Verringern der Kontaktfläche zwischen der Innenbuchse und dem Zapfen. Hierdurch wird eine Beschädigung, beispielsweise ein "Fressen", der Bauteile im Vergleich mit dem vorbekannten Stand der Technik reduziert.

Vorteilhafterweise ist der Lenker an einer Vorderrad- oder an einer Hinterradachse anordbar. Dies impliziert, dass der erfindungsgemäße Lenker vielfältig verwendbar ist.

Das erfindungsgemäße Herstellungsverfahren für einen erfindungsgemäßen Lenker eines Fahrzeugs mit einem Lager, umfasst folgende Verfahrensschritte:
a. das Lager und der Zapfen werden aus jeweils einer Menge von Bauteilen ausgewählt, deren relative Toleranzen für das Lager und den Zapfen eine Paarung nach Art einer Übergangspassung ergeben,
b. bei der Montage wird zunächst das Lager auf einen Zapfen des Lenkers aufgeschoben, vorzugsweise bis zu dem gestuften Bereich,
c. das Lager wird anschließend mittels des Befestigungsmittels an dem Zapfen fixiert, vorzugsweise mittels einer Schraube.

Das erfindungsgemäße Verfahren ermöglicht es folglich, den Zapfen und das Lager sicher und dauerhaft zu verbinden und diese Verbindung bei Bedarf, z.B. im Falle von Reparaturarbeiten zu demontieren, ohne dass das Lager beschädigt wird. Hierbei werden das Lager und der Zapfen im Vergleich zu dem vorbekannten Stand der Technik deutlich weniger beansprucht.

Weitere Vorteile und Eigenschaften der vorliegenden Erfindung werden im Folgenden anhand der Ausführungsbeispiele erläutert. Dabei zeigt
Figur 1 die Verbindung eines Lenkers mit Zapfen und eines Lagers nach Art einer Presspassung aus dem Stand der Technik;
Figur 2 einen Lenkerzapfen und ein Lager mit Formschluss und Schraubverbindung aus dem Stand der Technik;
Figur 3 einen erfindungsgemäßen Lenker mit Zapfen und Lager, welche nach Art einer Übergangspassung gepaart sind, mit Schraubensicherung;
Figur 4 eine vergrößerte Darstellung einer Weiterbildung des erfindungsgemäßen Lenkers mit Zapfen aus Figur 3 ohne Lager.

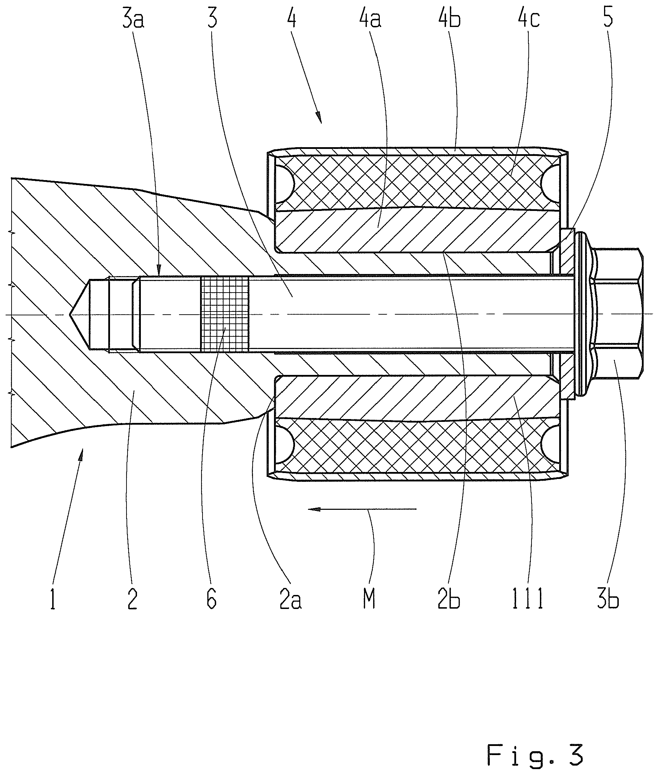

Figur 3 zeigt einen erfindungsgemäßen Lenker 1 mit Zapfen 2, welcher Zapfen 2 einen gestuften Bereich 2a und eine Anlagefläche 2b aufweist. Im Bereich der Anlagefläche 2b des Zapfens 2 ist ein Lager 4 angeordnet.

Das Lager 4 umfasst eine Innenbuchse 4a und eine Außenbuchse 4b, wobei zwischen der Innenbuchse 4a und der Außenbuchse 4b abschnittweise ein Elastomerkörper 4c angeordnet ist.

Die Innenbuchse 4a ist bis zu dem gestuften Bereich 2a des Zapfens 2 aufgeschoben. Dieser gestufte Bereich 2a dient als axialer Anschlag für das Lager 4 und vereinfacht die Montage.

Das Lager 4 und der Zapfen 2 weisen eine Übergangspassung auf, welche wie oben definiert aufzufassen ist. Dies bedeutet hinsichtlich der Istmaße, dass der Außendurchmesser des Zapfens 2 kleiner oder größer als der Innendurchmesser des Lagers 4 bzw. der Innenbuchse 4a ist.

Zur Sicherung des Lagers 4 des Zapfens 2 ist eine Schraube 3 vorgesehen. Die Schraube 3 ist in axialer Richtung entlang der Längserstreckung des Zapfens 2 in eine Bohrung des Zapfens 2 eingeschraubt und somit koaxial zu diesem angeordnet. Zwischen einem Schraubenkopf 3b und dem Lager 4 bzw. dem Zapfen 2 ist eine Scheibe 5 angeordnet. Die Scheibe 5 wirkt auf die Innenbuchse 4a des Lagers 4. Sie dient zum Übertragen der Vorspannkraft der Schraube.

Im Bereich 3a, d.h. im Bereich der Bohrung des Zapfens 2, ist eine Verklebung 6 vorgesehen, welche die Schraube 3 gegen ein Loslösen sichert.

Bei der Montage des Lagers 4 auf dem Zapfen 2 in dem Anlagebereich 2b wird zunächst das Lager 4 bis zu dem gestuften Bereich 2a auf den Zapfen 2 aufgeschoben, was wegen der Übergangspassung relativ leicht möglich ist. Anschließend wird in das Gewinde der Schraube die Verklebung 6 eingebracht. Die mit der Scheibe 5 versehene Schraube 3 wird im Anschluss daran in Richtung des Pfeils M in den Zapfen 2 eingeschraubt, bis der Schraubenkopf 3b bzw. die Scheibe 5 an dem Lager 4 im Bereich der Innenhülse 4a zur Anlage kommt. Die Außenhülse 4b des Lagers 4 wird mit einem weiteren Bauteil, beispielsweise der Karosserie eines Fahrzeugs (nicht gezeigt), verbunden.

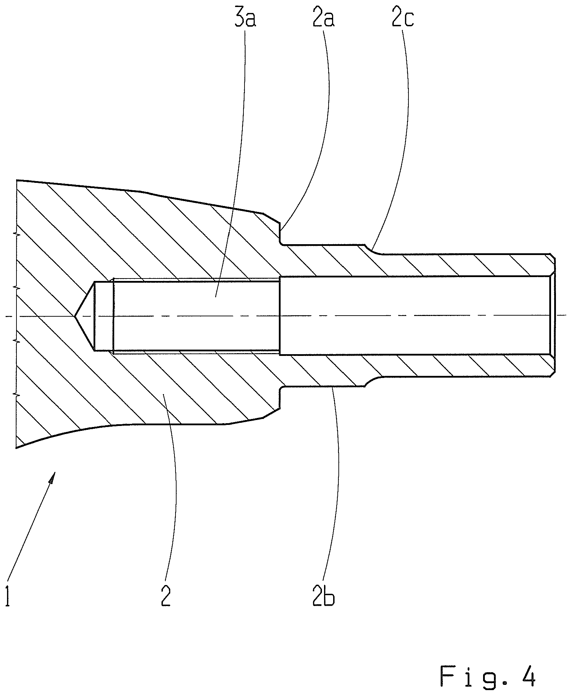

Figur 4 zeigt eine vergrößerte Darstellung einer Weiterbildung des Zapfens 2 aus Figur 3, jedoch ohne ein Lager 4. Der Zapfen 2 des Lenkers 1 weist im Unterschied zu Figur 3 einen weiteren gestuften Bereich 2c auf. Hierdurch wird die Anlagefläche 2b des Lagers 4 an dem Zapfen 2, wie oben bereits erläutert, verkleinert.

Bezugszeichen
- 1: Lenker
- 2: Zapfen
- 2a: gestufter Bereich
- 2b: Anlagefläche
- 2c: gestufter Bereich
- 3: Schraube
- 3a: Gewinde
- 3b: Schraubenkopf
- 4: Lager
- 4a: Innenbuchse
- 4b: Außenbuchse
- 4c: Elastomerkörper
- 5: Scheibe
- 6: Verklebung
- 11: Lenker
- 22: Zapfen
- 22a: gestufter Bereich
- 22b: Anlagefläche
- 44: Lager
- 44a: Innenbuchse
- 44b: Außenbuchse
- 44c: Elastomerkörper
- 111: Lenker
- 222: Zapfen
- 222a: Konusform
- 333: Schraube
- 444: Lager
- 444a: Innenbuchse
- 444b: Außenbuchse
- 444c: Elastomerkörper
- M: Bewegungsrichtung

## Patentansprüche

1. Lenker (1) für ein Fahrzeug, umfassend ein Lager (4) und einen Zapfen (2), wobei das Lager (4) als Gummilager ausgebildet ist und mindestens eine Innenbuchse (4a), eine Außenbuchse (4b) und ein zumindest abschnittsweise dazwischen angeordnetes elastisches Teilelement umfasst, und wobei der Zapfen (2) mindestens einen gestuften Bereich (2a) aufweist und das Lager (4) mit seiner Innenbuchse (4a) bis zu dem gestuften Bereich (2a) auf den Zapfen (2) aufgeschoben ist, sodass das Lager (4) an dem Zapfen (2) des Lenkers (1) angeordnet und den Zapfen (2) umschließend ausgebildet ist, wobei der Zapfen (2) und das Lager (4) derart zusammenwirkend ausgebildet sind, dass das Lager (4) bezogen auf den Zapfen (2) eine Übergangspassung aufweist, sodass die Innenbuchse (4a) und der Zapfen (2) nach Art einer Übergangspassung gepaart sind, und wobei das Lager (4) mittels eines Befestigungselementes (3) an dem Zapfen (2) des Lenkers (1) fixiert ist, welches lösbar ausgebildet und in Richtung der Längsachse des Zapfens (2) angeordnet ist, **dadurch gekennzeichnet, dass** das Befestigungselement (3) nach Art einer in den Zapfen eingeschraubten und koaxial zu diesem angeordneten Schraube ausgebildet ist.

2. Lenker (1) nach Anspruch 1, **dadurch gekennzeichnet, dass** der Zapfen (2) einstückig mit dem restlichen Lenker (1) ausgebildet ist.

3. Lenker (1) nach Anspruch 1, **dadurch gekennzeichnet, dass** der Zapfen (2) und der restliche Lenker (1) miteinander verbunden sind.

4. Lenker (1) nach mindestens einem der vorangegangenen Ansprüche, **dadurch gekennzeichnet, dass** das Befestigungselement (3) mittels Verklebung (6) gegen ein ungewolltes Loslösen gesichert ist, wobei die Verklebung (6) im Bereich eines Gewindes (3a) der Schraube angeordnet ist.

5. Lenker (1) nach mindestens einem der vorangegangenen Ansprüche, **dadurch gekennzeichnet, dass** zwischen der Schraube (3) und dem Lager (4) eine Scheibe (5) zum Übertragen der Schraubenvorspannkraft vorgesehen ist.

6. Lenker (1) nach mindestens einem der vorangegangenen Ansprüche, **dadurch gekennzeichnet, dass** das elastische Teilelement ein Elastomerkörper (4c) ist.

7. Lenker (1) nach mindestens einem der vorangegangenen Ansprüche, **dadurch gekennzeichnet, dass** der Zapfen (2) mindestens einen zweiten gestuften Bereich (2c) aufweist zum Verringern der Kontaktfläche zwischen der Innenbuchse (4a) und dem Zapfen (2).

8. Lenker (1) nach mindestens einem der vorangegangenen Ansprüche, **dadurch gekennzeichnet, dass** der Lenker (1) an einer Vorderrad- oder Hinterradachse anordbar ist.

9. Herstellungsverfahren für einen Lenker (1) eines Fahrzeugs mit einem Lager (4) nach mindestens einem der vorangegangenen Ansprüche, umfassend folgende Verfahrensschritte:
a. das Lager (4) und der Zapfen (2) werden aus jeweils einer Menge von Bauteilen ausgewählt, deren relative Toleranzen für das Lager (4) und den Zapfen (2) eine Paarung nach Art einer Übergangspassung ergeben,
b. bei der Montage wird zunächst das Lager (4) auf einen Zapfen (2) des Lenkers (1) bis zu dem gestuften Bereich (2a) aufgeschoben,
c. das Lager (4) wird anschließend mittels des Befestigungsmittels (3) an dem Zapfen (2) des Lenkers (1) mittels einer Schraube (3) fixiert.

## Claims

1. Link (1) for a vehicle, comprising a bearing (4) and a journal (2), the bearing (4) being configured as a rubber bearing and comprising at least one inner bush (4a), an outer bush (4b) and an elastic part element which is arranged at least in sections in between, and the journal (2) having at least one stepped region (2a), and the bearing (4) being pushed with its inner bush (4a) onto the journal (2) as far as the stepped region (2a), with the result that the bearing (4) is arranged on the journal (2) of the link (1) and is configured so as to enclose the journal (2), the journal (2) and the bearing (4) being configured so as to interact in such a way that the bearing (4) has a transition fit in relation to the journal (2), with the result that the inner bush (4a) and the journal (2) are paired in the manner of a transition fit, and the bearing (4) being fixed on the journal (2) of the link (1) by means of a fastening element (3) which is of releasable configuration and is arranged in the direction of the longitudinal axis of the journal (2), **characterized in that** the fastening element (3) is configured in the manner of a screw which is screwed into the journal and is arranged coaxially with respect to the latter.

2. Link (1) according to Claim 1, **characterized in that** the journal (2) is configured in one piece with the remaining link (1).

3. Link (1) according to Claim 1, **characterized in that** the journal (2) and the remaining link (1) are connected to one another.

4. Link (1) according to at least one of the preceding claims, **characterized in that** the fastening element (3) is secured against unintentional detaching by means of an adhesive bond (6), the adhesive bond (6) being arranged in the region of a thread (3a) of the screw.

5. Link (1) according to at least one of the preceding claims, **characterized in that** a washer (5) for transmitting the screw prestressing force is provided between the screw (3) and the bearing (4).

6. Link (1) according to at least one of the preceding claims, **characterized in that** the elastic part element is an elastomer body (4c).

7. Link (1) according to at least one of the preceding claims, **characterized in that** the journal (2) has at least one second stepped region (2c) for reducing the contact area between the inner bush (4a) and the journal (2).

8. Link (1) according to at least one of the preceding claims, **characterized in that** the link (1) can be arranged on a front wheel axle or a rear wheel axle.

9. Production method for a link (1) of a vehicle having a bearing (4) according to at least one of the preceding claims, comprising the following method steps:
a. the bearing (4) and the journal (2) are selected in each case from a quantity of components, the relative tolerances of which result in a pairing in the manner of a transition fit for the bearing (4) and the journal (2),
b. during the assembly, the bearing (4) is first of all pushed onto a journal (2) of the link (1) as far as the stepped region (2a),
c. the bearing (4) is subsequently fixed by means of the fastening means (3) on the journal (2) of the link (1), by means of a screw (3).

## Revendications

1. Bras de suspension (1) pour un véhicule, comportant un palier (4) et un tourillon (2), le palier (4) étant réalisé sous forme de palier en caoutchouc et comportant au moins une douille intérieure (4a), une douille extérieure (4b) et un élément partiel élastique disposé entre celles-ci au moins dans certaines régions, et le tourillon (2) comprenant au moins une zone étagée (2a) et le palier (4) doté de sa douille intérieure (4a) étant enfilé sur le tourillon (2) jusqu'à la zone étagée (2a), de telle sorte que le palier (4) soit disposé sur le tourillon (2) du bras de suspension (1) et soit réalisé de manière à entourer le tourillon (2), le tourillon (2) et le palier (4) étant réalisés de manière à coopérer de telle sorte que le palier (4) présente un ajustement de transition par rapport au tourillon (2), de telle sorte que la douille intérieure (4a) et le tourillon (2) soient appariés à la manière d'un ajustement de transition, et le palier (4) étant fixé au tourillon (2) du bras de suspension (1) au moyen d'un élément de fixation (3), lequel est réalisé de manière amovible et disposé dans la direction de l'axe longitudinal du tourillon (2), **caractérisé en ce que** l'élément de fixation (3) est réalisé à la manière d'une vis vissée dans le tourillon et disposée coaxialement à celui-ci.

2. Bras de suspension (1) selon la revendication 1, **caractérisé en ce que** le tourillon (2) est réalisé d'une seule pièce avec le reste du bras de suspension (1).

3. Bras de suspension (1) selon la revendication 1, **caractérisé en ce que** le tourillon (2) et le reste du bras de suspension (1) sont reliés l'un à l'autre.

4. Bras de suspension (1) selon au moins l'une quelconque des revendications précédentes, **caractérisé en ce que** l'élément de fixation (3) est fixé par collage (6) de manière à empêcher un desserrage indésirable, le collage (6) étant disposé dans la zone d'un filetage (3a) de la vis.

5. Bras de suspension (1) selon au moins l'une quelconque des revendications précédentes, **caractérisé en ce qu'**une rondelle (5) destinée à transmettre la force de précontrainte de vissage est prévue entre la vis (3) et le palier (4).

6. Bras de suspension (1) selon au moins l'une quelconque des revendications précédentes, **caractérisé en ce que** l'élément partiel élastique est un corps élastomère (4c).

7. Bras de suspension (1) selon au moins l'une quelconque des revendications précédentes, **caractérisé en ce que** le tourillon (2) comprend au moins une deuxième zone étagée (2c) pour réduire la surface de contact entre la douille intérieure (4a) et le tourillon (2).

8. Bras de suspension (1) selon au moins l'une quelconque des revendications précédentes, **caractérisé en ce que** le bras de suspension (1) peut être disposé sur un essieu de roue avant ou de roue arrière.

9. Procédé de fabrication pour un bras de suspension (1) d'un véhicule comprenant un palier (4) selon au moins l'une quelconque des revendications précédentes, comportant les étapes de procédé suivantes :
a. le palier (4) et le tourillon (2) sont sélectionnés respectivement à partir d'un ensemble de composants dont les tolérances relatives pour le palier (4) et le tourillon (2) produisent un appariement à la manière d'un ajustement de transition,
b. lors du montage, tout d'abord le palier (4) est enfilé sur un tourillon (2) du bras de suspension (1) jusqu'à la zone étagée (2a),
c. le palier (4) est ensuite fixé, grâce au moyen de fixation (3), au tourillon (2) du bras de suspension (1) au moyen d'une vis (3).
